# EUROPEAN PATENT SPECIFICATION

(11) **EP 3 410 013 B1**
(45) Date of publication and mention of the grant of the patent: **02.06.2021**
(21) Application number: 17743989.0
(22) Date of filing: 16.01.2017
(51) Int. Cl.: F23C 9/06, F23J 15/06, F23L 15/04, F23K 5/00

(54) **COMBUSTION GAS SUPPLY SYSTEM**
VERBRENNUNGSGASVERSORGUNGSSYSTEM
SYSTÈME DE DISTRIBUTION DE GAZ DE COMBUSTION

(30) Priority: 25.01.2016 JP 2016011368
(43) Date of publication of application: 05.12.2018
(73) Proprietor: IHI Corporation, Tokyo 135-8710 (JP)
(72) Inventor: SHIBUYA Hideshi, Tokyo 135-8710 (JP); YANO Akihisa, Tokyo 135-8710 (JP); OKA Tatsuya, Tokyo 135-8710 (JP); AKITA Takahito, Tokyo 135-8710 (JP); YAMAMOTO Taiga, Tokyo 135-8710 (JP); KAMEOKA Yushi, Tokyo 135-8710 (JP); TAKEUCHI Yusuke, Tokyo 135-8710 (JP); YASUI Koki, Tokyo 135-8710 (JP)
(74) Representative: Oxley, Robin John George
(86) International application number: PCT/JP2017/001153
(87) International publication number: WO 2017/130758

(56) References cited:
- EP-A1- 2 588 727
- EP-A2- 2 650 503
- WO-A1-2010/058750
- JP-A- H07 145 755
- JP-A- H07 145 755
- JP-A- 2004 071 279
- JP-A- 2004 360 694
- JP-A- 2010 065 694
- JP-A- 2011 014 497
- JP-A- 2012 007 213
- JP-A- 2013 221 501
- JP-A- 2013 537 596
- JP-A- 2014 105 593
- JP-A- 2014 515 084
- US-A1- 2005 028 529
- US-A1- 2011 314 966
- US-A1- 2014 338 901

## Description

### TECHNICAL FIELD

The present invention relates to a combustion gas supply system that supplies, as a heat source, a combustion gas generated by combusting a fuel.

### BACKGROUND ART

Combustion gases generated by combusting fuels have been utilized by various kinds of instruments and equipment as energy sources that supply thermal energy or power energy. For example, in internal combustion engines such as engines, turbines in power stations, and the like, a combustion gas is utilized as a power source, and the flow pressure of the combustion gas is converted into drive power or electric power. In boilers, reaction apparatuses and the like in chemical processing facilities, a combustion gas is used as a heat source, and the thermal energy of the combustion gas is transferred via heat exchange to a target substance to thereby heat the target substance, cause a change in its state (such as vaporization), cause a chemical reaction to progress, and so on.

Generally, a combustor which generates a combustion gas adds a fuel to air to be used as an oxygen source and combusts them. The higher the pressure and the temperature of the air are, the closer the efficiency of combustion in the combustor is to a theoretical value. Thus, the combustion efficiency is enhanced by compressing air, supplying it to the combustor, and combusting the fuel in the compressed air, and then a high-temperature pressurized combustion gas is generated.

In a system using combustion gas, attempts have been made to improve the efficiency of energy usage from the viewpoint of energy saving. For gas turbines and the like which use the combustion gas as a power source to generate electric power, designing a cogeneration system that collects a used gas being a combustion gas after its energy has been converted into mechanical power for electric power generation and that utilizes its residual heat, has been proposed.

Also, the efficiency of combustion in a combustor varies depending on the combustion conditions. In view of this, it is described in Japanese Utility Model Registration No. 3179432 (Patent Literature 1) that, when the oxygen content of a gas discharged from a combustion apparatus reaches or exceeds a preset value, the discharged gas is caused to flow back to an intake pipe to adjust the oxygen content in the combustion, thereby enhancing the efficiency of the combustion. EP2588727 (Patent Literature 2) discloses the features specified in the preamble of claim 1, methods and systems for low emission power generation in hydrocarbon recovery processes. US2005028529 (Patent Literature 3) discloses a method of generating energy in a power plant having a gas turbine, including as a first step a gas containing air is compressed in a first compressor of the gas turbine, a second step the compressed gas is fed to a combustion process with the addition of fuel in a combustor, a third step the hot flue gas from the combustor is expanded in an expander or a turbine, driving a generator, of the gas turbine while performing work, and a fourth step a partial flow of the expanded flue gas is recirculated to the inlet of the first compressor and admixed with the gas containing air. JPH07145755 (Patent Literature 4) discloses a high pressure atomized combustion equipment prevented from deterioration of condensation performance of its CO2 condenser due to soot and noncondensable gas. US2011314966 (Patent Literature 5) discloses an apparatus for producing a reducing gas for direct reduction iron-making including an internal-heating type reformer for reforming a natural gas by adding steam and oxygen to the natural gas and by partially burning the natural gas to generate reducing gas containing hydrogen and carbon monoxide; a remover for removing carbon dioxide from exhaust gas generated in the direct reduction iron-making; and a line for recycling as the reducing gas the exhaust gas from which the carbon dioxide is removed by the remover. EP2650503 (Patent Literature 6) discloses a power plant configured to include a recirculation loop about which a working fluid is recirculated.

### CITATION LIST

### PATENT LITERATURE

Patent Literature 1: Japanese Utility Model Registration No. 3179432
Patent Literature 2: EP2588727
Patent Literature 3: US2005028529
Patent Literature 4: JPH07145755
Patent Literature 5: US2011314966
Patent Literature 6: EP2650503

### SUMMARY OF INVENTION

### TECHNICAL PROBLEM

In the technique of Patent Literature 1, the waste gas after the combustion is reused to adjust the combustion conditions. This, however, is not about recovery of energy in the used gas being the combustion gas after being used as an energy source or about improvement of the energy efficiency. In other words, there is still room for improvement in recovery and reuse of energy for the used gas after supplying its heat, which is discharged when the combustion gas from the combustor is used as a heat source.

Also, the amount of heat that the combustion gas can supply is dependent on the conditions of the combustion in the combustor, the combustion conditions of the combustor can be adjusted so as to supply a desired amount of heat from the combustion gas by adjusting the amount of compressed air to be supplied to the combustor. However, the power consumption of an air compressor is large. In other words, reducing the power consumption associated with air compressors is an important issue for energy saving. In view of this, a technical improvement is needed which can freely adjust the amount of compressed air to be supplied to adjust the combustion conditions of the combustor, while also suppressing increase in power consumption.

The present invention solves such a problem, and an object thereof is to provide a combustion gas supply system capable of increasing the amount of compressed air to be supplied as necessary to supply a combustion gas in a preferable manner, while also suppressing increase in power consumption.

### SOLUTION TO PROBLEM

To solve the above problem, the present inventors have conducted an earnest research on addition of a compressor and power use, and discovered a simple configuration capable of suppressing increase in energy consumption by utilizing a used gas after being used as a heat source. As a result, the present inventors have reached the technique of the present invention.

The present invention provides a combustion gas supply system as claimed in claim 1.

The combustion gas supply system may include the additional features of claim 2. The combustion gas supply system may include the additional features of claim 3. This is suitable in view of reusing in combustion. The combustion gas supply system may include the additional features of claim 4. This is suitable in view of thermal efficiency.

The combustion gas supply system may include the additional features of claim 5. In this way, the combustion conditions can be adjusted in a preferable manner. The combustion gas supply system may include the additional features of claim 6. The combustion gas supply system may include the additional features of claim 7.

### ADVANTAGEOUS EFFECT OF INVENTION

According to the present invention reusing the used gas after the heat is consumed makes it possible to reduce the mechanical power of the compressor for the system as a whole, by effectively utilizing the residual pressure. It is therefore possible to provide a combustion gas supply system capable of adjusting the combustion conditions in a preferable manner and saving energy.

### BRIEF DESCRIPTION OF DRAWING

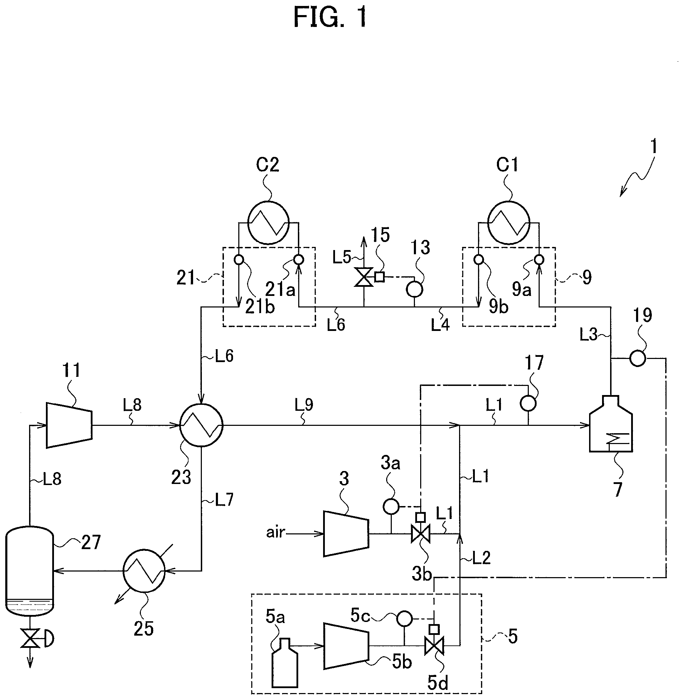

[FIG. 1] FIG. 1 is a schematic diagram illustrating the configuration of a combustion gas supply system according to one embodiment of the present invention.

### DESCRIPTION OF EMBODIMENTS

If the compression ratio (pressure ratio) of a compressor can be set to a low ratio, it is possible to reduce the power consumption of the compressor. In other words, if the pressure of the air introduced to the compressor is high, it is possible to obtain compressed air at the target pressure while also reducing the power consumption.

In terms of pressure, a used gas that is a combustion gas after being used as a heat source is suitable to be re-pressurized by a low-compression ratio compressor and used if it is collected as is without releasing its pressure. In a case of utilizing a combustion gas as a heat source as in a boiler, a reactor, or the like, decrease in pressure of the supplied combustion gas causes lowering its temperature, which is not preferable as a heat source. For this reason, an apparatus that consumes the heat (hereinafter, referred to as heat consumption apparatus) is configured such that the pressure of a combustion gas therein is maintained while heat is supplied from the combustion gas. Specifically, the pressure of a high-temperature pressurized combustion gas generated using compressed air in order to enhance the combustion efficiency is maintained inside the heat consumption apparatus, and the used gas discharged is a waste gas in a pressurized state such that the pressure of the unused combustion gas is substantially maintained excluding the pressure drop due to the resistance to flow and the like. Then, re-pressurizing and using this as a component of compressed air is very effective in reducing the power consumption of the compressor for the system as a whole. Also, although the oxygen content of the combustion gas decreases as a result of the consumption of oxygen in the combustion, the oxygen concentration is only about a half of that of air. Hence, by being mixed with normal air, the used gas can be utilized as compressed air to a satisfactory extent.

Based on the above, in the present invention, a used gas after being used as a heat source is recovered with its pressure maintained, compressed by a re-pressurizing compressor so as to regain a pressure equivalent to the pressure of the compressed air, and supplied to a combustor as supplementary compressed air. Accordingly, the electric power consumed by the re-pressurizing compressor is such electric power that is required to compensate for the pressure of the combustion gas lost in the course of supplying the heat therein as a heat source.

Moreover, the present invention provides a combustion gas supply system capable of suppressing increase in cost due to increased supply of compressed air by efficiently recovering energy from the used gas being a combustion gas after being used as a heat source, and also of freely adjusting the combustion conditions via supply of compressed air so that a combustion gas suitable for the intended use can be supplied.

Hereinbelow, embodiments of the present invention will be described in detail as mere examples with reference to the drawing. It is note that the dimensions and the materials as well as the specific numerical values and so on described in the embodiments are mere examples for facilitating the understanding of the disclosed content, and are not intended to limit the present disclosure unless otherwise noted. Also, illustration of elements that are not directly related to the present invention will be omitted.

FIG. 1 illustrates a combustion gas supply system according to one embodiment of the present invention. A combustion gas supply system 1 is a system that supplies a pressurized combustion gas generated by combusting compressed air containing a fuel, to a heat consumption apparatus C1. The heat consumption apparatus C1 is an apparatus having a heat exchange function that utilizes the combustion gas as a heat source and transfer the heat in the combustion gas to a target substance, and it consumes the heat in the supplied pressurized combustion gas and discharges, as a used gas, the pressurized combustion gas after the heat therein is consumed. Examples of the heat consumption apparatus C1 include apparatuses that heat a target substance or cause a change in its state (such as vaporization) by heating, such as a steam generator, a hot water generator, a thermic fluid heater, an air heater, and a hot gas generator, as well as reactors that heat a target substance to cause a chemical reaction therein to progress. The heat consumption apparatus C1 may also be a reactor using a catalyst containing an active metal such as Ni, Co, Fe, Pt, Ru, Rh, or Pd as its component. The kind of target substance to be heated and the purpose of the heating vary depending on the intended use of the heat consumption apparatus C1, and the temperature of the combustion gas and the flow rate at which it is supplied are appropriately adjusted in accordance with them.

The combustion gas supply system 1 has an air compressor 3, a fuel supply device 5, a combustor 7, a gas supply and recovery section 9, and a re-pressurizing compressor 11. The air compressor 3 compresses air and supplies the compressed air to the combustor 7 through a flow channel L1. The fuel supply device 5 supplies a fuel into the compressed air through a flow channel L2. The combustor 7 receives the fuel and the compressed air supplied by the air compressor 3 and the fuel supply device 5 and combusts them to thereby generate a pressurized combustion gas. The fuel supply device 5 includes a fuel source 5a and a fuel compressor 5b. A gaseous fuel supplied from the fuel source 5a is pressurized and compressed by the fuel compressor 5b, supplied at substantially the same pressure as the compressed air from the flow channel L2, and added to and mixed with the compressed air in the flow channel L1. The fuel source 5a may be the fuel contained in a fuel container or may be such that supplies the fuel through a connection line by using an external fuel supply system as a supply source. The fuel compressor 5b can be omitted in a case where the fuel source is a fuel contained in a container such as a pressurized cylinder or the like having a pressure adjuster that can adjust the extraction pressure of the fuel such as a pressure adjustment valve.

The pressurized combustion gas in the combustor 7 is supplied to the heat consumption apparatus C1 from a flow channel L3 through the gas supply and recovery section 9, and the pressurized combustion gas that the heat therein has been consumed is recovered as a used gas from the heat consumption apparatus C1. The gas supply and recovery section 9 includes a supply connection member 9a at an end of the flow channel L3 and a recovery connection member 9b at an end of a flow channel L4. They can connect the flow channels L3, L4 and the heat consumption apparatus C1 in a detachable manner and thereby allow the combustion gas supply system 1 and the heat consumption apparatus C1 to communicate with each other without a pressure loss. Hence, the pressurized combustion gas generated by the combustor 7 is supplied to the heat consumption apparatus C1 from the flow channel L3 through the gas supply and recovery section 9 while maintaining its pressure, and the pressurized combustion gas after the heat therein is consumed (used gas) is caused to flow back from the heat consumption apparatus C1 into the flow channel L4 while maintaining substantially its pressure excluding the pressure loss due to the flow resistance therein. The used gas (waste gas in a pressurized state) collected by the gas supply and recovery section 9 is discharged to the outside from the flow channel L4 through a flow channel L5 . A pressure meter 13 is provided on the flow channel L4, and a pressure adjustment valve 15 on the flow channel L5 is controlled based on its detection value, and the discharge of the used gas to the outside is controlled so as to maintain the pressure inside the combustion gas supply system 1 at a predetermined pressure. The pressure meter 13 of the flow channel L4 detects the pressure of the used gas, which is lower than the pressure of the pressurized combustion gas by the pressure loss. Hence, a pressure taking the pressure loss into account is set as the predetermined pressure. The pressure meter 13 may be provided to the flow channel L3 and the predetermined pressure in that case is set to the pressure of the pressurized combustion gas.

Air contains oxygen by about 20vol%. However, compressed air with an oxygen concentration lower than this can still be used for combustion, and therefore a mixture of compressed air and the used gas can be combusted. Hence, flow channels L6 to L9 are provided as a route branching from the flow channel L4 and joining to the flow channel L1, and a part of the used gas recovered by the gas supply and recovery section 9 is supplied from the flow channel L9 into the flow channel L1 and reused for combustion, whereas the remaining part is discharge to the outside. It is note that the pressure of the used gas recovered from the heat consumption apparatus C1 drops due to the resistance to flow. For this reason, in the present invention, the lost pressure of the used gas recovered from the flow channel L4 is compensated for by the re-pressurizing compressor 11, so that the used gas with its pressure raised to be equivalent to that of the compressed air is supplied to and mixed with the compressed air. In other words, the used gas with a compensated pressure is supplied to the combustor 7 together with the compressed air and the fuel as a mixture gas. Since the oxygen concentration of the compressed air to be supplied to the combustor 7 has a suitable range in view of combustion efficiency, the mixing ratio of the compressed air, the fuel and the used gas has an appropriate range. For this reason, on the flow channel L1, there are installed an oxygen concentration meter 17 that detects the oxygen concentration of the mixture gas to be supplied to the combustor 7, and a flowmeter 3a and a flow rate adjustment valve 3b which are electrically connected thereto in order to adjust the mixing ratio. The flow rate adjustment valve 3b is a valve controlled in accordance with the detection value of the flowmeter 3a. The flow rate of the compressed air in the flow channel L1 is adjusted by controlling the flow rate adjustment valve 3b based on the value of the oxygen concentration of the mixture gas detected by the oxygen concentration meter 17 such that the used gas, the fuel and the compressed air are mixed in a ratio that provides an appropriate oxygen concentration.

Further, the fuel supply device 5 includes a flowmeter 5c and a flow rate adjustment valve 5d on the flow channel L2. The flowmeter 5c and the flow rate adjustment valve 5d are electrically connected to a temperature meter 19 which is installed on the flow channel L3 to detect the temperature of the combustion gas. The flow rate adjustment valve 5d is controlled based on the temperature detected by the temperature meter 19, and the flow rate of the compressed fuel is adjusted by the flow rate adjustment valve 5d. By adjusting the flow rate of the fuel to be added to the compressed air to an appropriate rate with the flow rate adjustment valve 5d, the temperature of the combustion gas is adjusted to the desired temperature.

When a high-temperature pressurized combustion gas is supplied to the heat consumption apparatus C1, the temperature of the used gas recovered from the heat consumption apparatus C1 may not be so low. In this case, secondary use of the residual heat in the used gas will be preferable in view of energy efficiency. Thus, in the embodiment of FIG. 1, a gas supply and recovery section 21 similar to the gas supply and recovery section 9, including a supply connection member 21a and a recovery connection member 21b, is provided on the flow channel L6 and configured such that a different heat consumption apparatus C2 that utilizes a heat source of lower temperature than the heat consumption apparatus C1 can be connected. Hence, before a part of the recovered used gas is reused for combustion at the combustor 7, its residual heat is further collected and reused. Providing the gas supply and recovery section 21 is optional, and it may be omitted or provided in series downstream of the gas supply and recovery section 9 on the flow channel L4. Alternatively, the gas supply and recovery section 21 may be configured to be able to switch the connection between a state where the supply connection member 21a and the recovery connection member 21b are directly connected to each other and a state where they are connected to the heat consumption apparatus C2 so that it is possible to arbitrarily select connection to the heat consumption apparatus C2 or disconnection therefrom.

Since the combustion gas contains water vapor generated by the combustion, the moisture in the used gas in the flow channel L6 to be reused is removed before it is mixed with the compressed air. To do so, the combustion gas supply system 1 includes a heat exchanger 23, a cooler 25, and a condensation separator 27, and moisture is removed from the used gas by gas-liquid separation utilizing cold condensation of water vapor. Specifically, the part of the recovered used gas is supplied from the flow channel L6 to the cooler 25 on the flow channel L7 and cooled down to such a temperature that the part of the collected used gas can be supplied to the re-pressurizing compressor 11. The part of the collected used gas is then supplied to the condensation separator 27. The moisture condensed from the water vapor by the cooling of the used gas is separated from the used gas at the condensation separator 27 and removed to the outside. The used gas after removal of water vapor therefrom is introduced to the re-pressurizing compressor 11 from the condensation separator 27 through the flow channel L8 to be supplementarily compressed, so that the lost pressure due to the resistance to flow is compensated for and the used gas is therefore pressurized to the same pressure as the pressure of the compressed air. Further, in order to reduce the cold energy required by the cooler 25, the heat exchanger 23 is provided upstream of the cooler 25. The used gas in the flow channel L6 to be reused exchanges heat with the used gas in the flow channel L8 supplementarily compressed by the re-pressurizing compressor 11, at the heat exchanger 23 before being cooled by the cooler 25. The compressed used gas in the flow channel L8 is lower in temperature than the used gas in the flow channel L6, and is heated at the heat exchanger 23 by receiving the residual heat of the used gas in the flow channel L6 and its temperature therefore gets close to the temperature of the used gas in the flow channel L6. Consequently, the used gas dried and pressurized to the same pressure as the pressure of the compressed air flows through the flow channel L9 at a temperature close to that at the time of the recovering from the heat consumption apparatus and joins to the compressed air and the fuel in the flow channel L1. In other words, the residual heat of the used gas in the flow channel L6 is effectively utilized as it is transferred to the supplementarily compressed used gas at the heat exchanger 23.

An appropriate oxygen concentration of the compressed air to be supplied to the combustor 7 is preferably about 13 to 14vol% in view of energy saving. Since the oxygen concentration of air is about 20vol%, the used gas to be reused is preferably mixed so that its ratio (volume ratio) to the compressed air is about 1.5 to 1.8. Here, the proportion in volume of the compressed air in the mixture gas to be supplied to the combustor 7 is about 35 to 40% while the proportion in volume of the used gas is about 60 to 65%. Thus, in a state where the combustion gas supply system 1 of the present invention is in steady operation, about 60 to 65% of the used gas collected from the heat consumption apparatus C1 is reused, and the remaining part, which is about 35 to 40%, is discharged from the flow channel L5. This means a significant decrease in amount of operation of the air compressor 3 for supplying compressed air to the combustor 7 as compared to conventional combustion gas supply systems that discharge the used gas. Thus, considering the fact that the compression ratio required by the re-pressurizing compressor 11 is small and its power consumption is accordingly small, the major decrease in energy consumption of the air compressor 3 lowers the energy consumption of the system as a whole.

It is note that the combustion gas supply system 1 in FIG. 1 may be configured such that an expander is provided on the flow channel L5 to recover and reuse energy of the used gas discharged from the flow channel L5 as mechanical power. This further improves the energy efficiency.

In the combustion gas supply system 1, the combustor 7 is a pressurized combustor with pressure resistance capable of combusting a fuel in compressed air. The combustor 7 may be of any combustion type among an ignition type and a catalytic combustion type as long as it generates a combustion air by utilizing a combustion reaction. A catalytic combustion-type combustor is preferable in view of the stability of the combustion reaction and the like, and examples of the catalyst for the combustion include platinum- based catalysts and palladium-based catalysts. The required temperature of the combustion gas and the required amount of the combustion gas to be supplied vary depending on the intended use and usage conditions of the combustion gas at the heat consumption apparatus C1, and a combustor having a supply capability and thermal resistance suitable for the intended use and usage conditions may be selected as appropriate and used.

The fuel used for the combustion is a flammable gas, i.e. a gas containing a flammable component such as carbon monoxide, hydrogen, or a hydrocarbon compound (such as methane) . The flammable component of the fuel may be either a single component or a mixture composition. Gaseous fuels typically used for gas turbines and the like are preferably usable, and examples include fuels such as natural gases, coal gasification fuels, and biogases. The heating value of the fuel per unit volume varies depending on the content of its flammable component, and the appropriate amount of compressed air to be supplied varies as well.

The air compressor 3 may be any compressor that can be generally used for supplying combustion gas, and examples include a centrifugal compressor, an axial flow compressor, a reciprocating compressor, a diaphragm compressor, a twin-screw compressor, a single-screw compressor, a scroll compressor, and the like. Usually, a compressor capable of compressing air in a compression ratio (pressure ratio) of about 2.9 to 20.7 is preferably usable as the air compressor 3. The fuel compressor 5b may be any compressor that is capable of compressing the fuel gas to a pressure equivalent to the pressure of the compressed air, and one with a capacity corresponding to the flow rate at which the fuel is supplied is used. The fuel compressor 5b can be omitted in the case where the fuel is contained in a tank or the like including a pressure adjustment valve or the like. The re-pressurizing compressor 11 performs the supplementary pressurization in order to compensate for the lost pressure and therefore its pressure ratio required is lower than that of the air compressor 3 . The pressure loss caused by the flow resistance varies depending on the flow conditions in the heat consumption apparatuses C1, C2, but the pressure loss per apparatus can usually be predicted to be within the range of about 1.5 to 15% of the pressure at which the combustion gas is supplied (gauge pressure) . Thus, a compressor capable of compressing air in a pressure ratio of about 1.8 to 19.6 is preferably usable as the re-pressurizing compressor 11.

A heat exchanger can be selected as appropriate from among typically used gas-gas heat exchangers and used as the heat exchanger 23. Examples include a stationary heat exchanger, a rotary regenerative heat exchanger, and a periodic-flow regenerative heat exchanger, and the heat exchanger 23 may be any of these types. The cooler 25 is actually a heat exchanger, and neither its cooling method nor type of coolant is limited. The cooler 25 may be any one capable of lowering the temperature of the used gas to such a temperature that the used gas can be supplied to the re-pressurizing compressor 11, and having durability against the pressure of the used gas. A gas-liquid heat exchanger is preferable in view of the cooling efficiency and the like, and a typically used water-cooling cooler is preferably usable. The condensation separator 27 can also be selected as appropriate from among typically used gas-liquid separators, and one having durability against the pressure of the used gas is used.

The combustion gas supply system 1 has been described above as a system capable of selecting and replacing the heat consumption apparatus as necessary. In a case where changing the heat consumption apparatus is not necessary, this embodiment can be understood as a combustion gas supply system in which supply and consumption of the heat in a combustion gas are performed integrally. Specifically, according to one aspect of the present invention, the combustion gas supply system 1 is understood as including the air compressor 3, which supplies compressed air, the fuel supply device 5, which supplies a fuel, the combustor 7, which generates a pressurized combustion gas by combusting the fuel supplied by the fuel supply device and the compressed air supplied by the air compressor, the heat consumption apparatus C1, which consumes the heat in the pressurized combustion gas and discharges, as a used gas, the pressurized combustion gas after the heat therein is consumed, and the re-pressurizing compressor 11, which supplementarily pressurizes a part of the used gas discharged from the heat consumption apparatus and supplies it into the fuel and the compressed air supplied by the air compressor. In this case, the gas supply and recovery section 9, which enables attachment and detachment of the heat consumption apparatus, can be omitted, and the heat consumption apparatus C1 may be directly connected to the flow channels L3, L4. The same applies to the heat consumption apparatus C2 and the gas supply and recovery section 21.

A steady state in which the operation is stabilized by adjusting the mixture ratio of the used gas and the compressed air and the amount of the fuel to be supplied is as follows, for example. In the combustion gas supply system 1 which is connected with the heat consumption apparatus C1 requiring its heat source to be at a temperature of about 600 to 900°C and the heat consumption apparatus C2 requiring its heat source to be at a temperature of about 500 to 600°C, the flow rate of the fuel is adjusted such that a combustion gas at a temperature of about 800 to 900°C, a pressure of about 1.7 to 2.0 MPaG, and an oxygen concentration of about 8 to 10vol% is supplied from the combustor 7 to the heat consumption apparatus C1. As a result, the pressure of the used gas recovered from the heat consumption apparatus C1 usually drops to about 1.6 to 1.9 MPaG and its temperature is about 500 to 600°C. A part of the used gas is subjected to the secondary use at the heat consumption apparatus C2 and the heat therein is consumed, so that the temperature drops to about 450 to 550°C and the pressure drops to about 1.5 to 1.8 MPaG. This used gas can be cooled to about 120 to 145°C at the heat exchanger 23 via heat exchange with the used gas from which moisture has been removed. The used gas is further cooled to about 70 to 90°C at the cooler 25, so that condensate water is separated from the used gas. In order to be at the same pressure as the pressure of the compressed air supplied from the air compressor 3, the used gas dried by the gas-liquid separation at the condensation separator 27 is compressed to a pressure of about 1.8 to 2.1 MPaG by the re-pressurizing compressor 11, and its temperature rises to about 90 to 110°C. This compressed used gas is heated at the heat exchanger 23, so that its temperature gets close to the temperature of the used gas having passed through the heat consumption apparatus C2. As a result, a dried and compressed used gas at a temperature of about 480 to 580°C, a pressure of about 1.8 to 2.1 MPaG, and an oxygen concentration of about 8 to 10vol% is obtained. This used gas is mixed with compressed air at a temperature of about 150 to 170°C, a pressure of about 1.8 to 2.1 MPaG, and an oxygen concentration of 17 to 19vol% supplied from the air compressor 3 and the fuel (used gas: 60 to 65vol%, compressed air: 35 to 40vol%). As a result, a mixture gas at a pressure of about 1.8 to 2.1 MPaG and an oxygen concentration of about 11 to 15vol% is prepared at a temperature of about 140 to 180°C. This is supplied to the combustor 7 to generate a combustion gas similar to the above. The amount of the remaining part of the used gas, which is discharged to the outside from the flow channel L4 through the flow channel L5 without being reused, corresponds to the amount of compressed air supplied by the air compressor 3.

One embodiment of operation, not according to the invention, of the combustion gas supply system 1 in FIG. 1 will be described below via a simulation based on an exemplary case where a combustion gas is utilized to cause a chemical reaction to progress in a reaction apparatus by heating at a temperature of about 800°C. In this example, the reaction apparatus is connected to the gas supply and recovery section 9 as the heat consumption apparatus C1, and a relatively small steam generator for secondary use of the residual heat therein is connected to the gas supply and recovery section 21 as the heat consumption apparatus C2.

With the pressure adjustment valve 15 of the flow channel L5 set to maintain the internal pressure at 1.75 MPaG, a compressed fuel is added from the fuel supply device 5 to a compressed air supplied from the air compressor 3 at a pressure of 1.95 MPaG and a temperature of 161°C (oxygen concentration: 17.9vol%) and supplied to and combusted in the combustor 7, while the amount of the fuel to be supplied is adjusted such that the temperature of the combustion gas to be discharged from the combustor 7 will be 800°C or higher. As a result, a combustion gas at a temperature of 875°C, a pressure of 1.82 MPaG, and an oxygen concentration of 9.52vol% is supplied to the heat consumption apparatus C1, and a used gas at a temperature of 576°C, a pressure of 1.74 MPaG, and an oxygen concentration of 9.52vol% is recovered from the heat consumption apparatus C1. Apart of it is supplied to the heat consumption apparatus C2, and then the used gas at a temperature of 556°C, a pressure of 1.71 MPaG, and an oxygen concentration of 9.52vol% is cooled to 136°C at the heat exchanger 23 and further cooled to 80°C by the cooler 25. Condensate water is removed from this used gas by the condensation separator 27, so that it has a temperature of 80°C, a pressure of 1.65 MPaG, and an oxygen concentration of 9.93vol%. This used gas is compressed in a pressure ratio of 1.2 by the re-pressurizing compressor 11, so that a dried and compressed used gas at a temperature of 103 °C and a pressure of 1.98 MPaG is supplied to the heat exchanger 23. The dried and compressed used gas flowing out from the heat exchanger 23 is at a temperature of 546°C, a pressure of 1.95 MPaG, and an oxygen concentration of 9.93vol%, and is mixed with the compressed air supplied from the air compressor 3 and the fuel. Once the used gas starts being supplied through the flow channel L6, the control on the flow rate adjustment valve 3b based on the oxygen concentration meter 17 is initiated, thereby adjusting the flow rate of the compressed air such that the oxygen concentration of the mixture gas will be 13vol%. As a result, the proportions of the used gas and the compressed air occupying the mixture gas will be 61.5% and 38.5%, respectively. In the period from the start of operation to the steady state, the flow rate of the compressed air supplied from the air compressor 3 decreases and then becomes constant. When the steady state is reached, the used gas starts being discharged to the outside from the flow channel L5, and its proportion comes to 38.5%.

As described above, the combustion gas supply system of the present invention is a system capable of supplying a combustion gas while appropriately adjusting its temperature and supply amount, and is therefore capable of stably supplying a high-temperature combustion gas as a heat source. The combustion gas supply system of the present invention is therefore particularly useful in cases where the heat consumption apparatuses are reaction apparatuses that perform chemical syntheses with various thermal reactions (endothermic reactions) or processing apparatuses that perform processes in which it is important to suppress alteration by means of temperature control when melting or fusion of a substance is caused to progress. Examples of such reaction apparatuses include reactors that perform syntheses utilizing various thermal decomposition reactions such as steam reforming reaction of methane, dry reforming reaction of methane, and reforming reaction of methanol. Meanwhile, in order to reduce the power consumption of the re-pressurizing compressor 11, the pressure loss of the used gas to be recovered is preferably small. For this reason, the heat consumption apparatuses are preferably apparatuses that utilize the supplied combustion gas only as a heat source and do not directly utilize the combustion gas as a mechanical power source. It is of course not problematic if mechanical power, electric power, or the like is indirectly generated from the heat obtained from the heat source.

Although embodiments of the present invention have been described above with reference to the accompanying drawing, the present invention is not limited to the above embodiments. It is to be understood that various changes and modifications that those skilled in the art can conceive of also belong to the technical scope of the present invention within the scope described in the claims, as a matter of course.

### INDUSTRIAL APPLICABILITY

The technique of the present invention, by applying it to a system that supplies a combustion gas, can contribute to reduction of the amount of used gas discharged and reduction of power consumption. Through various chemical reactions and processes using the combustion gas as a heat source, the technique of the present invention can also contribute to stable supply of target reaction products and processed products and reduction of the production costs.

## Claims

1. A combustion gas supply system (1), comprising:
an air compressor (3) adapted to supply compressed air;
a fuel supply device (5) adapted to supply a fuel;
a combustor (7) adapted to generate a pressurized combustion gas by combusting the fuel supplied by the fuel supply device (5) and the compressed air supplied by the air compressor (3);
a gas supply and recovery section (9, 21) adapted to supply the pressurized combustion gas generated by the combustor (7) to a heat consumption apparatus (C1, C2) and adapted to recover, as a used gas, the pressurized combustion gas whose heat has been consumed;
a re-pressurizing compressor (11) adapted to supplementarily compress a part of the used gas recovered by the gas supply and recovery section (9, 21), **characterized in that**:
the gas supply and recovery section (9, 21) is adapted to supply the part of the used gas to the compressed air supplied by the air compressor (3),
a first flow channel (L1) is adapted to supply the compressed air from the air compressor (3) and the fuel from the fuel supply device (5), to the combustor (7); and
a second flow channel (L8, L9) is adapted to supply the part of the used gas supplementarily compressed by the re-pressurizing compressor (11), to the compressed air and the fuel of the first flow channel (L1),
wherein the part of the used gas is to be supplied to the combustor (7) as a mixed gas with the compressed air and the fuel.

2. The combustion gas supply system (1) according to claim 1, wherein the re-pressurizing compressor (11) is adapted to supplementarily compress the part of the used gas so as to pressurize the part of the used gas to a same pressure as a pressure of the compressed air supplied by the air compressor (3), and a remaining part of the used gas is to be discharged to an outside.

3. The combustion gas supply system (1) according to claim 1 or 2, further comprising:
a cooler (25) adapted to cool the part of the used gas; and
a condensation separator (27) adapted to separate moisture condensed by the cooling, from the part of the used gas,
wherein the re-pressurizing compressor (11) is adapted to supplementarily compress the part of the used gas from which moisture has been removed by the condensation separator (27).

4. The combustion gas supply system (1) according to claim 3, further comprising a heat exchanger (23) adapted to cause the part of the used gas, before being cooled by the cooler (25), to exchange heat with the part of the used gas supplementarily compressed by the re-pressurizing compressor (11) .

5. The combustion gas supply system (1) according to any one of claims 1 to 4, further comprising a flow rate adjustment valve (3b) adapted to adjust a flow rate of the compressed air supplied by the air compressor (3),
wherein a proportion of the compressed air supplied by the air compressor (3) and the part of the used gas supplied by the re-pressurizing compressor (11) is to be adjusted by using the flow rate adjustment valve.

6. The combustion gas supply system (1) according to claim 5, further comprising an oxygen concentration meter (17)adapted to detect an oxygen concentration of the mixed gas
wherein the flow rate adjustment valve (3b) is adapted to be controlled based on a detection value of the oxygen concentration meter (17).

7. The combustion gas supply system (1) according to any one of claims 1 to 6, wherein the fuel supply device (5) includes a fuel compressor (5b) and is adapted to supply a compressed fuel pressurized to a same pressure as a pressure of the compressed air.

8. The combustion gas supply system (1) according to any one of claims 1 to 7, wherein the gas supply and recovery section (9, 21) includes a supply connection member (9a, 21a) and a recovery connection member (9b, 21b) to allow the heat consumption apparatus (C2, C2) to be connected in a detachable manner.

9. The combustion gas supply system (1) according to any one of claims 1 to 7, further comprising:
a heat consumption apparatus (C1, C2) connected to the gas supply and the recovery section (9, 21), to consume heat in the pressurized combustion gas and discharge, as the used gas, the pressurized combustion gas whose heat has been consumed,
wherein the used gas discharged from the heat consumption apparatus (C1, C2) is to be recovered by the gas supply and recovery section (9, 21).

10. The combustion gas supply system (1) according to claim 9, wherein the heat consumption apparatus (C1, C2) has a heat exchange function for utilizing the pressurized combustion gas as a heat source.

## Patentansprüche

1. Verbrennungsgasversorgungssystem (1), umfassend:
einen Luftverdichter (3), welcher angepasst ist, um Druckluft zuzuführen;
eine Kraftstoffversorgungsvorrichtung (5), welche angepasst ist, um einen Kraftstoff zuzuführen;
einen Brenner (7), welcher angepasst ist, um ein druckbeaufschlagtes Verbrennungsgas durch Verbrennung des Kraftstoffes, welcher durch die Kraftstoffversorgungsvorrichtung (5) zugeführt wird, und die Druckluft zu erzeugen, welche durch den Luftverdichter (3) zugeführt wird;
einen Gasversorgungs- und Rückgewinnungsabschnitt (9, 21), welcher angepasst ist, um das druckbeaufschlagte Verbrennungsgas, welches durch den Brenner (7) erzeugt wird, an eine Wärmeverbrauchervorrichtung (C1, C2) zuzuführen, und welcher angepasst ist, um als verbrauchtes Gas, das druckbeaufschlagte Verbrennungsgas zurückzugewinnen, dessen Wärme verbraucht wurde;
einen wiederunterdrucksetzenden Verdichter (11), welcher angepasst ist, um einen Teil des verbrauchten Gases, welches durch den Gasversorgungs- und Rückgewinnungsabschnitt (9, 21) zurückgewonnen wurde, zusätzlich zu verdichten, **dadurch gekennzeichnet, dass**:
der Gasversorgungs- und Rückgewinnungsabschnitt (9, 21) angepasst ist, um den Teil des verbrauchten Gases an die Druckluft zuzuführen, welche durch den Luftverdichter (3) zugeführt wird,
wobei ein erster Strömungskanal (L1) angepasst ist, um die Druckluft von dem Luftverdichter (3) und den Kraftstoff von der Kraftstoffversorgungsvorrichtung (5) an den Brenner (7) zuzuführen; und
wobei ein zweiter Strömungskanal (L8, L9) angepasst ist, um den Teil des verbrauchten Gases, welcher zusätzlich durch den wiederunterdrucksetzenden Verdichter (11) verdichtet wurde, an die Druckluft und den Kraftstoff des ersten Strömungskanals (L1) zuzuführen,
wobei der Teil des verbrauchten Gases an den Brenner (7) in Form eines Mischgases mit der Druckluft und dem Kraftstoff zuzuführen ist.

2. Verbrennungsgasversorgungssystem (1) nach Anspruch 1, wobei der wiederunterdrucksetzende Verdichter (11) angepasst ist, um den Teil des verbrauchten Gases zusätzlich zu verdichten, um den Teil des verbrauchten Gases mit demselben Druck der Druckluft zu beaufschlagen, die von dem Luftverdichter (3) zugeführt wird, und wobei ein restlicher Teil des verbrauchten Gases nach außen abzuführen ist.

3. Verbrennungsgasversorgungssystem (1) nach Anspruch 1 oder 2, ferner umfassend:
einen Kühler (25), welcher angepasst ist, um den Teil des verbrauchten Gases zu kühlen; und
einen Kondensationsabscheider (27), welcher angepasst ist, um Feuchte, die durch Kühlen kondensiert, von dem Teil des verbrauchten Gases abzuscheiden,
wobei der wiederunterdrucksetzende Verdichter (11) angepasst ist, um den Teil des verbrauchten Gases, von welchem die Feuchte durch den Kondensationsabscheider (27) entfernt wurde, zusätzlich zu verdichten.

4. Verbrennungsgasversorgungssystem (1) nach Anspruch 3, ferner umfassend einen Wärmetauscher (23), welcher angepasst ist, um zu veranlassen, dass der Teil des verbrauchten Gases, vor dem Kühlen durch den Kühler (25), Wärme mit dem Teil des verbrauchten Gases austauscht, welches durch den wiederunterdrucksetzenden Verdichter (11) zusätzlich verdichtet wurde.

5. Verbrennungsgasversorgungssystem (1) nach einem der Ansprüche 1 bis 4, ferner umfassend ein Durchflussrateeinstellventil (3b), welches angepasst ist, um eine Durchflussrate der Druckluft einzustellen, welche durch den Luftverdichter (3) zugeführt wird,
wobei ein Prozentsatz der Druckluft, die durch den Luftverdichter (3) zugeführt wird und des Teils des verbrauchten Gases, welches durch den wiederunterdrucksetzenden Verdichter (11) zugeführt wird, einzustellen ist, indem das Durchflussrateeinstellventil verwendet wird.

6. Verbrennungsgasversorgungssystem (1) nach Anspruch 5, ferner umfassend ein Sauerstoffkonzentrationsmessgerät (17), welches angepasst ist, um eine Sauerstoffkonzentration des Mischgases zu detektieren, wobei das Durchflussrateeinstellventil (3b) angepasst ist, um auf der Grundlage eines Detektionswerts des Sauerstoffkonzentrationsmessgeräts (17) gesteuert zu werden.

7. Verbrennungsgasversorgungssystem (1) nach einem der Ansprüche 1 bis 6, wobei die Kraftstoffversorgungsvorrichtung (5) einen Kraftstoffverdichter (5b) umfasst und angepasst ist, um einen druckbeaufschlagten Kraftstoff zuzuführen, welcher mit demselben Druck wie der der Druckluft beaufschlagt wird.

8. Verbrennungsgasversorgungssystem (1) nach einem der Ansprüche 1 bis 7, wobei der Gasversorgungs- und Rückgewinnungsabschnitt (9, 21) ein Versorgungsverbindungsglied (9a, 21a) und ein Rückgewinnungsverbindungsglied (9b, 21b) umfasst, um zu ermöglichen, dass die Wärmeverbrauchervorrichtung (C2, C2) lösbar verbunden wird.

9. Verbrennungsgasversorgungssystem (1) nach einem der Ansprüche 1 bis 7, ferner umfassend:
eine Wärmeverbrauchervorrichtung (C1, C2), welche mit dem Gasversorgungs- und Rückgewinnungsabschnitt (9, 21) verbunden ist, um Wärme in dem druckbeaufschlagten Verbrennungsgas zu verbrauchen und als verbrauchtes Gas das druckbeaufschlagte Verbrennungsgas abzuführen, dessen Wärme verbraucht wurde,
wobei das verbrauchte Gas, welches von der Wärmeverbrauchervorrichtung (C1, C2) abgeführt wird, durch den Gasversorgungs- und Rückgewinnungsabschnitt (9, 21) zurückzugewinnen ist.

10. Verbrennungsgasversorgungssystem (1) nach Anspruch 9, wobei die Wärmeverbrauchervorrichtung (C1, C2) eine Wärmetauschfunktion aufweist, um das druckbeaufschlagte Verbrennungsgas als Wärmequelle zu verwenden.

## Revendications

1. Système d'alimentation en gaz de combustion (1), comprenant :
un compresseur d'air (3) adapté pour assurer l'alimentation en air comprimé ;
un dispositif d'alimentation en carburant (5) adapté pour assurer l'alimentation en carburant ;
une chambre de combustion (7) adaptée pour générer un gaz de combustion sous pression en brûlant le carburant fourni par le dispositif d'alimentation en carburant (5) et l'air comprimé fourni par le compresseur d'air (3) ;
une section d'alimentation et de récupération de gaz (9, 21) adaptée pour fournir le gaz de combustion sous pression généré par la chambre de combustion (7) à un appareil de consommation de chaleur (C1, C2) et adaptée pour récupérer, en tant que gaz utilisé, le gaz de combustion sous pression dont la chaleur a été consommée ;
un compresseur de remise sous pression (11) adapté pour comprimer de manière supplémentaire une partie du gaz utilisé récupéré par la section d'alimentation et de récupération du gaz (9, 21), **caractérisé en ce que** :
la section d'alimentation et de récupération de gaz (0, 21) est adaptée pour fournir la partie du gaz utilisé à l'air comprimé fourni par le compresseur d'air (3) ;
un premier canal d'écoulement (L1) est adapté pour fournir l'air comprimé provenant du compresseur d'air (3) et le carburant provenant du dispositif d'alimentation en carburant (5) à la chambre de combustion (7) ; et
un deuxième canal d'écoulement (L8, L9) est adapté pour fournir la partie du gaz utilisé comprimée de manière supplémentaire par le compresseur de remise sous pression (11) à l'air comprimé et au carburant du premier canal d'écoulement (L1) ;
dans lequel la partie du gaz utilisé doit être fournie à la chambre de combustion (7) sous la forme d'un gaz mélangé avec l'air comprimé et le carburant.

2. Système d'alimentation en gaz de combustion (1) selon la revendication 1, dans lequel le compresseur de remise sous pression (11) est adapté pour comprimer de manière supplémentaire la partie du gaz utilisé de sorte à mettre sous pression la partie du gaz utilisé à une pression identique à une pression de l'air comprimé fourni par le compresseur d'air (3), et une partie restante du gaz utilisé doit être déchargée vers l'extérieur.

3. Système d'alimentation en gaz de combustion (1) selon les revendications 1 ou 2, comprenant en outre :
un refroidisseur (25) adapté pour refroidir la partie du gaz utilisé ; et
un séparateur de condensation (27) adapté pour séparer l'humidité condensée par le refroidissement de la partie du gaz utilisé ;
dans lequel le compresseur de remise sous pression (11) est adapté pour comprimer de manière supplémentaire la partie du gaz utilisé, de laquelle l'humidité a été éliminée par le séparateur de condensation (27).

4. Système d'alimentation en gaz de combustion (1) selon la revendication 3, comprenant en outre un échangeur de chaleur (23) adapté pour entrainer l'échange de chaleur de la partie du gaz utilisé, avant son refroidissement par le refroidisseur (25), avec la partie du gaz utilisé comprimée de manière supplémentaire par le compresseur de remise sous pression.

5. Système d'alimentation en gaz de combustion (1) selon l'une quelconque des revendications 1 à 4, comprenant en outre une soupape d'ajustement du débit (3b) adaptée pour ajuster un débit de l'air comprimé fourni par le compresseur d'air (3) ;
dans lequel une proportion de l'air comprimé fourni par le compresseur d'air (3) et de la partie du gaz utilisé fournie par le compresseur de remise sous pression (11) doit être ajustée par l'intermédiaire de la soupape d'ajustement du débit.

6. Système d'alimentation en gaz de combustion (1) selon la revendication 5, comprenant en outre un compteur de la concentration en oxygène (17) adapté pour détecter une concentration en oxygène du gaz mélangé ;
dans lequel la soupape d'ajustement du débit (3b) est adaptée pour être contrôlée sur la base d'une valeur de détection du compteur de la concentration en oxygène (17).

7. Système d'alimentation en gaz de combustion (1) selon l'une quelconque des revendications 1 à 6, dans lequel le dispositif d'alimentation en carburant (5) inclut un compresseur de carburant (5b) et est adapté pour fournir un combustible comprimé mis sous pression à une pression identique à une pression de l'air comprimé.

8. Système d'alimentation en gaz de combustion (1) selon l'une quelconque des revendications 1 à 7, dans lequel la section d'alimentation et de récupération de gaz (9, 21) inclut un élément de connexion d'alimentation (9a, 21a) et un élément de connexion de récupération (9b, 21b) pour permettre la connexion détachable de l'appareil de consommation de chaleur (C1, C2).

9. Système d'alimentation en gaz de combustion (1) selon l'une quelconque des revendications 1 à 7, comprenant en outre :
un appareil de consommation de chaleur (C1, C2) connecté à la section d'alimentation et de récupération de gaz (9, 21), pour consommer la chaleur dans le gaz de combustion sous pression et décharger, en tant que gaz utilisé, le gaz de combustion sous pression dont la chaleur a été consommée ;
dans lequel le gaz utilisé déchargé à partir de l'appareil de consommation de chaleur (C1, C2) doit être récupéré par la section d'alimentation et de récupération de gaz (9, 21).

10. Système d'alimentation en gaz de combustion (1) selon la revendication 9, dans lequel l'appareil de consommation de chaleur (C1, C2) a une fonction d'échange de chaleur pour utiliser le gaz de combustion sous pression en tant que source de chaleur.
